(19)

**Europäisches Patentamt**
**European Patent Office**
**Office européen des brevets**

(11) **EP 4 711 327 A1**

(12) **EUROPEAN PATENT APPLICATION**

(43) Date of publication:
18.03.2026  Bulletin 2026/12

(21) Application number: 25201431.1

(22) Date of filing: 10.09.2025

(51) International Patent Classification (IPC):
*C01B 3/047* (2026.01)   *C22C 19/03* (2006.01)
*C22C 38/00* (2006.01)   *C22C 38/40* (2006.01)
*F02B 43/00* (2006.01)   *F02M 21/02* (2006.01)
*B01J 19/02* (2006.01)   *H01M 8/0606* (2016.01)
*H01M 8/22* (2006.01)   *F02C 3/22* (2006.01)
*F02C 6/18* (2006.01)

(52) Cooperative Patent Classification (CPC):
**C01B 3/047; B01J 19/02; C22C 19/03;**
**C22C 38/00; C22C 38/40; F02C 3/22; F02C 6/18;**
**H01M 8/0606; H01M 8/222;** B01J 2219/0236;
C01B 2203/0277; C01B 2203/06; C01B 2203/066;
C01B 2203/1288; C01B 2203/1628;       (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority:  12.09.2024  KR 20240125183
31.10.2024  KR 20240153012
30.05.2025  KR 20250071514

(71) Applicant: SK Innovation Co., Ltd.
Seoul 03188 (KR)

(72) Inventors:
• **SUNG, Jong Baek**
**34124 Daejeon (KR)**

• **CHOI, Won Seok**
**34124 Daejeon (KR)**
• **PARK, Hyun Joon**
**34124 Daejeon (KR)**
• **CHOI, Jae Suk**
**34124 Daejeon (KR)**
• **LEE, Ji Yun**
**34124 Daejeon (KR)**
• **IM, Ju Hwan**
**34124 Daejeon (KR)**

(74) Representative: **Prüfer & Partner mbB**
**Patentanwälte · Rechtsanwälte**
**Sohnckestraße 12**
**81479 München (DE)**

(54) **CORROSION-RESISTANT SYSTEM, CARBON-FREE POWER GENERATION AND FUEL CELL SYSTEM COMPRISING SAID CORROSION-RESISTANT SYSTEM, AND AMMONIA DECOMPOSITION METHOD**

(57)    A corrosion-resistant system, a carbon-free power generation and fuel cell system comprising the corrosion-resistant system, and a method for ammonia decomposition utilizing said corrosion-resistant system are provided. The corrosion-resistant system includes: an ammonia supply unit; a first pipe connected to the ammonia supply unit; an ammonia decomposition unit comprising a chamber connected to the first pipe; and a second pipe connected to the chamber, wherein the chamber is configured to operate at an operating temperature of 410°C or lower, the first pipe and the chamber comprise at least one selected from the group consisting of carbon steel, low alloy steel, stainless steel and a nickel-based alloy, and the second pipe comprises a nickel-based alloy ($N_T$) satisfying Equation 1 below.

[Equation 1]

$$T \le 15\ \mu m$$

[Fig. 1]

**(Cont. next page)**

(52) Cooperative Patent Classification (CPC): (Cont.)
C01B 2203/84; H01M 2008/1293

**Description**

[BACKGROUND OF THE INVENTION]

1. Field of the Invention

The disclosure of the present application relates to a corrosion-resistant system, a carbon-free power generation system, and a fuel cell system. The disclosure of the present application further relates to a method of decomposing ammonia utilizing the corrosion-resistant system.

2. Description of the Related Art

Hydrocarbon-based fossil fuels such as coal and oil are used as energy sources in various industrial fields. However, such hydrocarbon-based fossil fuels are finite in quantity and are gradually being depleted. Further, carbon-containing compounds, such as carbon dioxide, are continuously emitted during combustion, thereby accelerating climate change and global warming.

Consequently, there is a growing global need for renewable and environmentally friendly new energy sources, and interest in ammonia as an alternative energy source has been increasing.

[SUMMARY OF THE INVENTION]

An object of the present disclosure is to provide a corrosion-resistant system with improved reaction reliability and energy efficiency.

An object of the present disclosure is to provide a carbon-free power generation system with improved reaction reliability and energy efficiency.

An object of the present disclosure is to provide a fuel cell system with improved reaction reliability and energy efficiency.

A corrosion-resistant system according to a general aspect of the present disclosure includes: an ammonia supply unit; a first pipe connected to the ammonia supply unit; an ammonia decomposition unit including a chamber connected to the first pipe; and a second pipe connected to the chamber, wherein the first pipe is configured to introduce a first gas stream including ammonia into the chamber, the chamber is configured to partially decompose ammonia to produce hydrogen and nitrogen inside the chamber, and a second gas stream including unreacted ammonia that has not been decomposed in the chamber, and hydrogen and nitrogen is dischargeable from the chamber, wherein the chamber is configured to operate at an operating temperature of 410°C or lower, wherein the first pipe and the chamber includes at least one selected from the group consisting of carbon steel, low alloy steel, stainless steel and a nickel-based alloy, and wherein the second pipe includes a nickel-based alloy ($N_T$) satisfying Equation 1 below.

$$[Equation\ 1]$$

$$T \leq 15\ \mu m$$

In Equation 1, T is the maximum value of nitrided depths measured from a side surface toward a central axis of a cylindrical specimen when the nickel-based alloy ($N_T$) is prepared as a cylindrical specimen having a diameter of 2 mm and a height of 200 mm, and the cylindrical specimen is exposed to a gas stream including 97.2% by volume $NH_3$, 2.1% by volume $H_2$, and 0.7% by volume $N_2$ in a temperature environment of 500°C for 100 hours, and the nitrided depths are measured using scanning electron microscopy (SEM) and energy dispersive X-ray spectroscopy (EDS) analysis.

In some embodiments, in Equation 1, T may be $\leq 13\ \mu m$.

In some embodiments, the first gas stream may include ammonia in an amount of 90% by volume to 100% by volume with respect to the entire first gas stream volume.

In some embodiments, the second pipe may be formed of the nickel-based alloy ($N_T$).

In some embodiments, the nickel-based alloy ($N_T$) may include one or more alloys selected from the group consisting of UNS N06601, UNS N06625, UNS N06690, UNS N07718, UNS N07792 and UNS N06002, as classified under the unified numbering system (UNS).

In some embodiments, a conversion rate of ammonia in the chamber may be 1.4% or more.

In some embodiments, the chamber may include an inlet that is arranged to introduce the first gas stream, and an outlet that is arranged to discharge the second gas stream, and during the partial decomposition of ammonia in the chamber, an inlet temperature of the chamber may be controllable in a range of 300°C to 410°C, and an outlet temperature of the chamber may be controllable in a range of 300°C to 600°C.

In some embodiments, the outlet temperature of the chamber may be controllable in a range of 300°C to 550°C.

In some embodiments, a temperature difference between the inlet temperature and the outlet temperature of the chamber may be controllable in a range of 0°C to 200°C.

In some embodiments, the chamber may further include a catalyst filling section filled with a catalyst.

In some embodiments, a space velocity may be 4,000 hr$^{-1}$ or more and, preferably, 120,000 hr$^{-1}$ or less inside the chamber and/or the catalyst filling section filled with the catalyst.

In some embodiments, while the first gas stream flows through the first pipe, an inlet temperature of the first pipe may be controllable in a range of 0°C to 200°C, and an outlet temperature of the first pipe may be controllable in a range of 200°C to 410°C.

In some embodiments, while the second gas stream flows through the second pipe, an inlet temperature of the second pipe may be controllable in a range of 410°C to 650°C, and an outlet temperature of the second pipe may be controllable in a range of 450°C to 700°C.

In some embodiments, while the second gas stream flows through the second pipe, a temperature of the second gas stream from an inlet to an outlet of the second pipe may be increasable at a heating rate of 0.1°C/min to 10°C/min.

In some embodiments, the chamber may include at least one selected from the group consisting of low alloy steel, stainless steel, and a nickel-based alloy.

In another general aspect, the present disclosure relates to a method for controlling ammonia decomposition utilizing a corrosion-resistant system which comprises: an ammonia supply unit; a first pipe arranged to be connected to the ammonia supply unit; an ammonia decomposition unit comprising a chamber arranged to be connected to the first pipe; and a second pipe arranged to be connected to the chamber, the first pipe and the chamber comprising at least one selected from the group consisting of carbon steel, low alloy steel, stainless steel and a nickel-based alloy, and the second pipe comprising a nickel-based alloy ($N_T$) satisfying Equation 1 below:

[Equation 1]

$$T \leq 15 \ \mu m,$$

in Equation 1, T is the maximum value of nitrided depths measured from a side surface toward a central axis of a cylindrical specimen when the nickel-based alloy ($N_T$) is prepared as a cylindrical specimen having a diameter of 2 mm and a height of 200 mm, and the cylindrical specimen is exposed to a gas stream comprising 97.2% by volume $NH_3$, 2.1% by volume $H_2$, and 0.7% by volume $N_2$ in a temperature environment of 500°C for 100 hours, and the nitrided depths are measured using scanning electron microscopy (SEM) and energy dispersive X-ray spectroscopy (EDS) analysis, the method comprising the following steps: a first gas stream comprising ammonia is introduced into the chamber through the first pipe, ammonia is then partially decomposed in the chamber to produce hydrogen and nitrogen, and a second gas stream comprising unreacted ammonia that has not been decomposed in the chamber, and hydrogen and nitrogen is discharged from the chamber, an operating temperature of the chamber 20 being 410°C or lower.

A carbon-free power generation system according to exemplary embodiments of the present disclosure includes: the above-described corrosion-resistant system; and a turbine power generation unit that is arranged to be connected to at least part of the outlet of the corrosion-resistant system.

In some embodiments, the second gas stream may be supplied to a fuel supply pipe of the turbine power generation unit.

A fuel cell system according to exemplary embodiments of the present disclosure may include: the above-described corrosion-resistant system; and a fuel cell unit including at least one fuel cell stack and arranged to be connected to at least part of the outlet of the corrosion-resistant system.

In some embodiments, the second gas stream may be supplied to a fuel supply pipe of the fuel cell unit.

The corrosion-resistant system according to embodiments of the present disclosure may achieve improved reaction reliability and energy efficiency.

The carbon-free power generation system according to embodiments of the present disclosure may achieve improved reaction reliability and energy efficiency.

The solid oxide fuel cell system according to embodiments of the present disclosure may achieve improved reaction reliability and energy efficiency.

If corrosion increases on the inner surfaces of chambers, pipes, or other components during the ammonia feeding, the efficiency of hydrogen generation may decrease and the flow rate or purity of the generated hydrogen may become non-uniform.

However, in the corrosion-resistant system according to embodiments of the present disclosure, the structural stability of apparatuses such as chambers and/or pipes may be maintained, whereby the efficiency and/or reproducibility of the hydrogen production reaction may be ensured, and consequently hydrogen of uniform quality may be supplied more stably. In addition, according to embodiments of the present disclosure, during long-term operation, combustion reactions or electrochemical reactions using hydrogen as a fuel (e.g., carbon-free power generation or fuel cell reactions) may be stably performed, thereby reducing performance degradation or output non-uniformity of the entire system.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a schematic block diagram of a corrosion-resistant system according to an embodiment of the present disclosure;

FIG. 2 is a schematic block diagram of a carbon-free power generation system according to an embodiment of the present disclosure;

FIG. 3 is a schematic block diagram of a solid oxide fuel cell system according to an embodiment of the present disclosure;

FIG. 4 is a graph illustrating the results of a corrosion resistance evaluation according to operating temperature when a chamber operating time was 36 hours in Examples 1, 1-1 and 1-2;

FIG. 5 is a graph illustrating the results of a corrosion resistance evaluation according to operating temperature when the chamber operating time was 100 hours in Examples 1, 1-1 and 1-2;

FIG. 6 is a set of scanning electron microscope (SEM) images showing cross-sections of nitrided specimens after the corrosion resistance evaluation of the chamber according to the operating time in Examples 1 to 5;

FIGS. 7A and 7B are scanning electron microscope (SEM) images showing cross-sections of nitrided specimens after the corrosion resistance evaluation of a second pipe according to the operating time in Examples 1 to 5 and Comparative Examples 1 to 4;

FIG. 8 is a graph illustrating the results of a corrosion rate evaluation of the chamber in Examples 1 to 5; and

FIG. 9 is a graph illustrating the results of a corrosion rate evaluation of the second pipe in Example 1 and Comparative Examples 2 and 3.

[DETAILED DESCRIPTION OF THE INVENTION]

<Corrosion-resistant system>

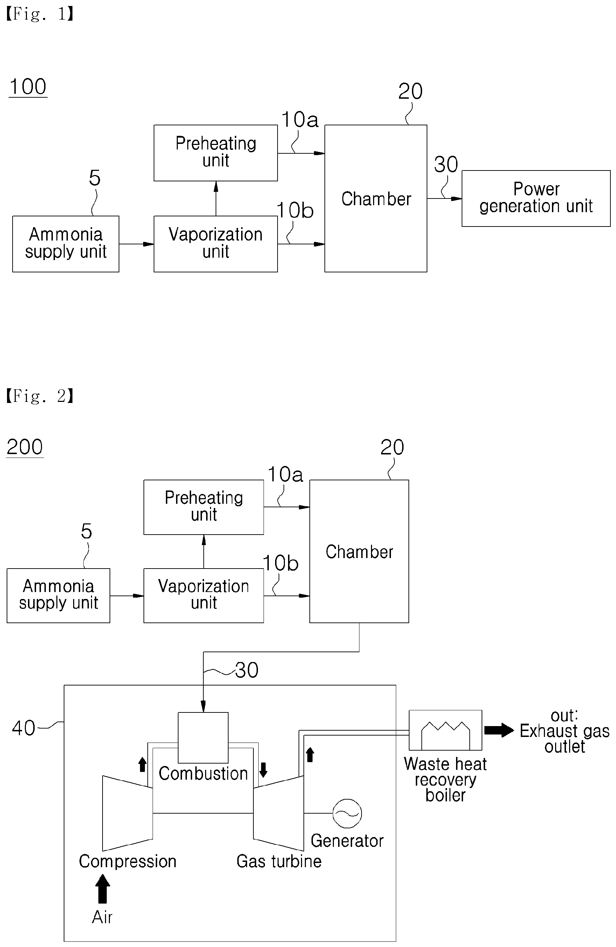

FIG. 1 is a schematic block diagram of a corrosion-resistant system 100 according to exemplary embodiments.

The corrosion-resistant system 100 according to exemplary embodiments of the present disclosure includes an ammonia supply unit 5, first pipes 10a and 10b (hereinafter collectively referred to as "first pipe 10") connected to the ammonia supply unit 5, an ammonia decomposition unit including a chamber 20 connected to the first pipe 10, and a second pipe 30 connected to the chamber 20.

A first gas stream including ammonia is introduced into the chamber 20 through the first pipe 10, and ammonia is partially decomposed in the chamber 20 to produce hydrogen and nitrogen. A second gas stream including unreacted ammonia that has not been decomposed in the chamber 20, and hydrogen and nitrogen, is discharged from the chamber 20. An operating temperature of the chamber 20 is 410°C or lower.

The first pipe 10 and the chamber 20 include at least one selected from the group consisting of carbon steel, low alloy steel, stainless steel, and a nickel-based alloy, and the second pipe 30 includes a nickel-based alloy ($N_T$) satisfying Equation 1 below.

$$[\text{Equation 1}]$$

$$T \leq 15 \ \mu m$$

In Equation 1, T is the maximum value of nitrided depths measured from a side surface toward a central axis of a cylindrical specimen when the nickel-based alloy ($N_T$) is prepared as a cylindrical specimen having a diameter of 2 mm and a height of 200 mm, and the cylindrical specimen is exposed to a gas stream including 97.2% by volume ("vol%") $NH_3$, 2.1 vol% $H_2$, and 0.7 vol% $N_2$ in a temperature environment of 500°C for 100 hours. The nitrided depths are measured using scanning electron microscopy (SEM) and energy dispersive X-ray spectroscopy (EDS) analysis.

Therefore, the corrosion-resistant system 100 may be capable of suppressing or reducing corrosion inside the pipe and/or chamber during the process of decomposing or transporting ammonia.

As used herein, the nickel-based alloy may be used to mean all alloys that have nickel as a main component and have one or more metal elements such as chromium (Cr), iron (Fe), molybdenum (Mo), cobalt (Co), aluminum (Al), titanium (Ti), and tungsten (W) added thereto.

Further, as used herein, an alloy satisfying Equation 1 above is referred to as a "nickel-based alloy $(N_T)$" to distinguish it from general nickel-based alloys.

In some embodiments, the corrosion-resistant system 100 may be provided as a system for decomposing ammonia into hydrogen and nitrogen.

High-purity ammonia may rapidly corrode the pipe and/or chamber at temperatures exceeding 410°C.

In the corrosion-resistant system 100, the operating temperature of the chamber 20 is controlled to 410°C or lower, and the second pipe 30, which may be controlled to a temperature greater than 410°C as necessary, is formed of the nickel-based alloy $(N_T)$, thereby effectively preventing or reducing nitridation within the overall system.

Metals used to form components such as the piping and chamber may undergo a nitridation reaction due to a reaction with ammonia when exposed to high-purity ammonia at high temperatures, resulting in the formation of nitridation products extending from the surface of the metal into the interior region. When these nitridation products form on the inner surface of the piping or chamber, microcracks may occur, the flow characteristics of the gas stream may deteriorate, and the uniformity of the reaction may be impaired. As a result, the replacement cycle of the piping and chamber may be shortened, which may lead to an increase in maintenance costs.

Even when high-purity ammonia comes into contact with the inner surface of the chamber 20, at temperature environments of 410°C or lower, the nitridation reaction on the surface may be significantly reduced or not accelerated by the corrosion-resistant system 100.

Furthermore, the corrosion-resistant system 100 may be capable of suppressing or reducing the nitridation reaction caused by ammonia on the inner surface of the second pipe 30, which includes the nickel-based alloy $(N_T)$ satisfying Equation 1, even in high-temperature environments exceeding 410°C, thereby ensuring enhanced nitridation resistance.

For example, T represented by Equation 1 may be measured as follows:

When a nickel-based alloy $(N_T)$ cylindrical specimen is exposed to a gas stream including 97.2 vol% $NH_3$, 2.1 vol% $H_2$, and 0.7 vol% $N_2$ in a temperature environment of 500°C for 100 hours, a nitrided or non-nitrided cylindrical specimen may be obtained.

As used herein, the term 'nitrided layer or nitrided parts' refers to a region of the metal in which nitrogen has diffused to form a metal nitride $(M_xN_y)$ structure, which can be experimentally confirmed, for example, by X-ray diffraction (XRD) analysis or via SEM-EDS analysis. In the above region, a metal nitride phase may be detected by XRD analysis at $2\theta$ values corresponding to $M_xN_y$, such as $Fe_4N$, $CrN$, or other metal nitride phases, depending on the base metal. The term 'non-nitrided layer or non-nitrided parts' refers to a region of the metal substrate in which such a nitride phase is not observed under the same analytical conditions.

For example, 41 specimens may be obtained by cutting the nitrided cylindrical specimen at 5 mm intervals along the height from one end, in a direction perpendicular to the height. SEM images may be taken of the cut circular cross-sections of the obtained specimens using a scanning electron microscope (SEM). The elemental composition within the SEM images may be analyzed using the energy dispersive X-ray spectroscopy (EDS) function of the scanning electron microscope (SEM).

As a non-limiting example, a focused ion beam-scanning electron microscope (FIB-SEM) may be used as the scanning electron microscope. For example, a plasma-focused ion beam-scanning electron microscope manufactured by Thermo Fisher Scientific may be used.

In other words, nitrides are not present or detected in a non-nitrided metal. The elemental composition in the SEM images can be analyzed using the energy-dispersive X-ray spectroscopy (EDS) function of the scanning electron microscope (SEM), which allows for the identification of nitrides.

Based on the analytical results of the elemental composition, nitrided depths may be measured from three arbitrary points on the outermost edge of the circular cross-section toward the central axis. The nitrided depth may refer to the depth in a direction perpendicular to the outer peripheral surface (side surface) of the cylindrical specimen, i.e., a direction extending toward the central axis of the cylinder. The corrosion resistance may be considered higher when the maximum value among the nitrided depths is smaller.

The operating temperature of the chamber 20 may refer to an average temperature, and thus, the chamber 20 may be controlled to an average temperature of 410°C or lower. The average temperature of the chamber 20 may be calculated, for example, as the arithmetic mean temperature of the inlet and outlet temperatures of each pipe, or as the mass flow-weighted average temperature or the spatial average temperature within each pipe. The average temperature may be appropriately selected depending on the flow conditions, measurement environment, and system configuration, and may include an error range of $\pm 10°C$ to $\pm 1°C$ depending on the measurement conditions and environment.

In some embodiments, the overall temperature of the chamber 20 may be controlled to 410°C or lower.

In the chamber 20, ammonia contained in the first gas stream may be partially decomposed to produce hydrogen and nitrogen at an ammonia conversion rate of 1.4% or more.

The ammonia decomposition reaction proceeds according to the following reaction equation and is an endothermic reaction.

[Reaction Equation]

$$2NH_3 \rightarrow N_2 + 3H_2$$

In some embodiments, the conversion rate of ammonia in the chamber 20 may be 1.4% or more, for example, 2.0% or more, 7% or more, 7.5% or more, 10% or more, 11% to 30%, or 15% to 25%.

The ammonia conversion rate (%) may be calculated using the following equation (Equation 2):

Ammonia conversion rate (%) = {(Supply ammonia flow rate) - (Unreacted ammonia flow rate) / (Supply ammonia flow rate)} $\times$ 100 [Equation 2]

By way of non-limiting example, the concentrations of respective gases contained in the gas mixture stream may be measured using conventional gas concentration analysis methods and the corresponding analyzers. Examples of such methods and analyzers include, for instance, gas chromatography (GC), Fourier transform infrared (FT-IR) spectroscopy, and mass spectrometry (MS). In the corrosion-resistant system 100 according to some embodiments, a second gas stream including unreacted ammonia that has not been decomposed in the chamber 20, and hydrogen and nitrogen, may be discharged from the chamber 20 and introduced into the second pipe 30.

According to some embodiments, the corrosion-resistant system 100 may suppress corrosion within the chamber 20 and the second pipe 30, thereby achieving improved reaction reliability and energy efficiency.

As a non-limiting example, the corrosion-resistant system 100 may include one or more of the first pipe 10 and/or the second pipe 30, for example, in a number ranging from 1 to 10, 1 to 7, or 1 to 5.

In some embodiments, T in Equation 1 may be, for example, 13 μm or less, 12 μm or less, or 10 μm or less. Accordingly, the corrosion-resistant system 100 may further improve operational stability and energy efficiency.

In some embodiments, the corrosion-resistant system 100 may further include, for example, an ammonia supply unit 5, a vaporization unit, a preheating unit, an adsorption unit, and/or a recovery unit, which may be connected to each other via connection lines. The connection line may be, for example, a connecting pipe. The connecting pipe may include carbon steel, low-alloy steel, stainless steel, and/or a nickel-based alloy. The layout, length, and other parameters of the connecting pipes may be variously modified as needed.

In some embodiments, the first gas stream may include ammonia in an amount of, for example, 90% by volume ("vol%") to 100 vol%, preferably 95 vol% to 99.9 vol%, or more preferably 99 vol% to 99.999 vol%.

Non-limiting examples of the first gas stream may include 99.9 vol% $NH_3$ and trace amounts of impurities. The impurities may include, for example, water vapor, nitrogen, oxygen, and/or hydrogen.

In some embodiments, the chamber 20 may include an inlet through which the first gas stream is introduced, and an outlet through which the second gas stream is discharged.

During the partial decomposition of ammonia in the chamber 20, the inlet temperature of the chamber 20 may be controlled in a range of 300°C to 410°C, and the outlet temperature of the chamber 20 may be controlled in a range of 300°C to 600°C, optionally 300°C to 550°C.

In some embodiments, the outlet temperature of the chamber 20 may be controlled at 410°C or lower, for example, in a range of 300°C to 410°C.

In some embodiments, a temperature difference in temperature between an inlet temperature and an outlet temperature of the chamber 20 may be controlled in a range of 0°C to 200°C, for example, 10°C to 150°C, or 10°C to 100°C. Accordingly, corrosion within the chamber 20 may be further suppressed, and the amounts of hydrogen and nitrogen contained in the second gas stream may be effectively controlled.

In some embodiments, the internal temperature of the chamber 20 during the ammonia decomposition reaction may be maintained at 410°C or lower, for example, in a range of 250°C to 410°C, 270°C to 390°C, 270°C to 370°C, or 310°C to 370°C.

Accordingly, corrosion within the chamber 20 may be further suppressed, and the amounts of hydrogen and nitrogen contained in the second gas stream may be controlled.

As a non-limiting example, the chamber 20 may have a heat exchanger-type structure that is continuously supplied with heat, or an adiabatic reactor-type structure in which a preheated gas stream is supplied to facilitate the decomposition reaction.

In some embodiments, while the first gas stream flows through the first pipe 10, the inlet temperature of the first pipe 10 may be controlled in a range of 0°C to 200°C, or 70°C to 160°C, for example, and the outlet temperature of the first pipe 10 may be controlled in a range of 200°C to 410°C, or 250°C to 350°C, for example.

In some embodiments, while the second gas stream flows through the second pipe 30, the inlet temperature of the second pipe 30 may be controlled in a range of 410°C to 650°C, or 450°C to 600°C, for example, and the outlet temperature of the second pipe 30 may be controlled in a range of 450°C to 700°C, 450°C to 600°C, or 600°C to 700°C, for example.

In some embodiments, while the second gas stream flows through the second pipe 30, the temperature of the second gas stream from the inlet to the outlet of the second pipe 30 may be increased at a heating rate of 0.1°C/min to 10°C/min, or 1°C/min to 5°C/min.

Therefore, corrosion within the second pipe 30 may be further suppressed.

In some embodiments, the second gas stream may include ammonia in an amount of 97.2 vol% or less. The concentration of ammonia contained in the second gas stream may be, for example, 70.0 vol% to 97.2 vol%, 70.0 vol% to 90.0 vol%, 75.0 vol% to 85.0 vol%, or 75.0 vol% to 81.8 vol%.

Accordingly, the corrosion-resistant system may achieve improved operational stability and energy efficiency.

In some embodiments, the chamber 20 may further include a catalyst filling section filled with a catalyst. The catalyst filling section may be, for example, a catalyst filling tube filled with a catalyst, and the catalyst filling tube may be mounted inside the chamber 20.

In some embodiments, a space velocity may be 4,000 $hr^{-1}$ or more inside the chamber 20. In some embodiments, a space velocity may be in a range of 4,000 $hr^{-1}$ to 120,000 $hr^{-1}$ inside the catalyst-filled tube that is mounted inside the chamber 20. The space velocity may be a volumetric space velocity, which is calculated by dividing the amount of gas ($Nm^3$/hr) that the catalyst, that is disposed within the chamber 20, can process per hour by the volume of catalyst filled ($Nm^3$), and may refer to the amount of gas that a unit volume of catalyst can process per hour.

The space velocity may be, for example, 4,000 $hr^{-1}$ to 120,000 $hr^{-1}$, or 10,000 $hr^{-1}$ to 100,000 $hr^{-1}$, so that corrosion within the chamber 20, the catalyst and/or the catalyst filled tube may be suppressed, and the conversion rate of ammonia may be effectively controlled by increasing reaction rate(s) through improving the contact time between reactants and active catalytic sites.

In some embodiments, the catalyst may include an active metal supported on a support, and the support may be doped with a metal element. The support may be, for example, zeolite, silica alumina, or similar aluminosilicates, and the metal element may include, for example, Zn, Co, Cu, K, Na, Cs, Mo, Se, Pd, Pt, Ba, Mg, Ca, Sr and/or Li.

In some embodiments, the first pipe 10 and the chamber 20 may be formed of carbon steel, low-alloy steel, stainless steel, and/or a nickel-based alloy.

In some embodiments, the first pipe 10 and the chamber 20 may include low-alloy steel, stainless steel, and/or a nickel-based alloy.

The low-alloy steel may include, for example, 1% by weight ("wt%") to 35 wt%, 1 wt% to 30 wt%, or 5 wt% to 35 wt% of an alloying element based on the total weight. Non-limiting examples of the alloying element may include carbon, silicon, manganese, nickel, aluminum, chromium, phosphorus, sulfur, molybdenum, copper, nitrogen.

The stainless steel may include, for example, austenitic stainless steel, ferritic stainless steel, martensitic stainless steel, and/or pearlite stainless steel.. The stainless steel may further include cementite.

In some embodiments, the first pipe 10 and the chamber 20 may include a nickel-based alloy ($N_T$).

In some embodiments, the second pipe 30 may include a nickel-based alloy ($N_T$). all or part of the interior or the entirety of the second pipe 30 may be formed of the nickel-based alloy ($N_T$). Accordingly, it is possible to prevent or inhibit a decrease in the thermal conductivity of the second pipe 30, thereby achieving improved operational stability and energy efficiency.

In some embodiments, the nickel-based alloy ($N_T$) may include 40 wt% to 80 wt% of nickel. The nickel content is based on the total weight of the nickel-based alloy.

In some embodiments, the nickel content of the nickel-based alloy ($N_T$) may be, for example, 40 wt% to 78 wt%, or 52 wt% to 75 wt%.

In some embodiments, the nickel-based alloy ($N_T$) may include, for example, a Ni-Cu-Fe-based alloy, a Ni-Cr-Mo-W-based alloy, a Ni-Cr-Fe-Mo-based alloy, and/or a Ni-Cr-Co-W-based alloy.

The nickel-based alloy ($N_T$) may include, for example, one or more alloys selected from the group consisting of UNS N06601, UNS N06625, UNS N06690, UNS N07718, UNS N07792 and UNS N06002, as classified under the unified numbering system (UNS).

In some embodiments, the flow rate of at least one of the first gas stream and the second gas stream may be controlled in a range of 1000 kg/hr to 500,000 kg/hr, for example, 1000 kg/hr to 10,000 kg/hr, 10,000 kg/hr to 250,000 kg/hr, or 250,000 kg/hr to 500,000 kg/hr.

**In** some embodiments, the ammonia decomposition unit may further include an additional chamber connected to the chamber 20. The additional chamber connected to the chamber 20 may be included in the ammonia decomposition unit as, for example, a main cracker, and may include the nickel-based alloy ($N_T$). The chamber 20 and the additional chamber may be connected via a connection line, which may be, for example, a connecting pipe, and the connecting pipe may include the nickel-based alloy ($N_T$).

In some embodiments, the ammonia supply unit 5 may store and supply ammonia. The ammonia supply unit 5 may store and supply, for example, ammonia in the form of gaseous state (hereinafter, also abbreviated as "gaseous ammonia") or ammonia in the form of liquid state (hereinafter, also abbreviated as "liquid ammonia").

When the ammonia supply unit 5 stores and supplies liquid ammonia, the corrosion-resistant system 100 may include the vaporization unit that vaporizes the liquid ammonia. For example, liquid ammonia may be supplied from the ammonia supply unit 5 to the vaporization unit, and gaseous ammonia vaporized by a vaporizer may be supplied from the vaporization unit to the chamber 20.

As a non-limiting example, the ammonia supply unit 5 may be an ammonia storage tank.

The corrosion-resistant system 100 may include the preheating unit connected to the vaporization unit, and the gaseous ammonia may be preheated by a preheater in the preheating unit.

**In** some embodiments, the adsorption unit may separate or collect, for example, hydrogen, nitrogen, and/or ammonia.

The adsorption unit may separate and/or collect the above-described gases using adsorption-based techniques such as temperature swing adsorption (TSA), pressure swing adsorption (PSA), or vacuum pressure swing adsorption (VPSA).

The adsorption unit may include, for example, an adsorption tower filled with an adsorbent. The adsorption tower may be, for example, a configuration in which one or more adsorption towers are connected in series or in parallel, a configuration in which one or more towers are connected within a single adsorption tower, or a combination thereof.

The adsorbent may include, for example, a hydrogen-selective adsorbent, a nitrogen-selective adsorbent, and/or an ammonia-selective adsorbent. The adsorbent may include, for example, $CaCl_2/Al_2O_3$, $MgCl_2/Al_2O_3$, silica, alumina, activated carbon, and/or zeolite. The zeolite may have a framework structure such as MFI, CHA, CHA-Cs, CHI, ERI, FAU, FER, GOO, HEU, LTA, MER, MON, MOR, RHO, AEI, AFX, DDR, LEV, RTH, and other zeolitic framework structures.

In one embodiment, the structure of the zeolite may be, for example, in the form of CHA, LTA, and/or FAU.

In some embodiments, the recovery unit may recover and/or store, for example, off-gas streams, or trim gas streams discharged from the second pipe 30 and/or the adsorption unit.

In some embodiments, the corrosion-resistant system 100 may further include a power generation unit. The power generation unit may receive fuel from the second pipe 30 and generate electricity.

As a non-limiting example, each of the ammonia supply unit 5, ammonia decomposition unit, vaporization unit, preheating unit, adsorption unit, recovery unit, a reaction heat supply unit, and power generation unit may include one or more inlets and/or outlets through which a gas stream is introduced or discharged. Furthermore, the system may include one or more connection lines for connecting the units, which may be connecting pipes. The connecting pipes may include, for example, carbon steel, low-alloy steel, stainless steel, and/or a nickel-based alloy. The layout, length, and other parameters of the connecting pipes may be variously modified as needed.

In some embodiments, the corrosion-resistant system 100 may further include a monitoring unit including, for example, a temperature detection sensor or a flow rate detection sensor. The monitoring unit may include, for example, a controller configured to detect temperature, flow rate, or other parameters such as pressure, and control them within a predetermined range.

As a non-limiting example, the corrosion-resistant system 100 may include an operating temperature control device configured to maintain the operating temperature of the chamber 20 at about 410°C or lower. For example, the operating temperature control device may include a heater, a thermocouple, and/or a controller. The heater may be a heating means operated by, for example, an electric resistance heater, induction heater, or external heat source. The thermocouple may detect the temperature inside the chamber 20 in real time, and the controller may control the operation of the heater based on temperature information to maintain the temperature within a predetermined range. The configuration or installation method of the operating temperature control device is not particularly limited.

A corrosion-resistant system 100 comprising an ammonia supply unit 5; a first pipe 10a, 10b arranged to be connected to the ammonia supply unit 5; an ammonia decomposition unit comprising a chamber 20 arranged to be connected to the first pipe 10a, 10b; and a second pipe 30 arranged to be connected to the chamber 20, the first pipe 10a, 10b and the chamber 20 comprising at least one selected from the group consisting of carbon steel, low alloy steel, stainless steel and a nickel-based alloy, the second pipe 30 comprising a nickel-based alloy ($N_T$) satisfying Equation 1 below, may be utilized for ammonia decomposition or at least partial decomposition of ammonia through which hydrogen may be generated in an environmentally friendly manner.

[Equation 1]

$$T \leq 15 \ \mu m,$$

in Equation 1, T is the maximum value of nitrided depths measured from a side surface toward a central axis of a cylindrical specimen when the nickel-based alloy ($N_T$) is prepared as a cylindrical specimen having a diameter of 2 mm and a height of 200 mm, and the cylindrical specimen is exposed to a gas stream comprising 97.2% by volume $NH_3$, 2.1% by volume $H_2$, and 0.7% by volume $N_2$ in a temperature environment of 500°C for 100 hours, and the nitrided depths are measured using scanning electron microscopy (SEM) and energy dispersive X-ray spectroscopy (EDS) analysis.

The method for ammonia decomposition comprises the following steps: a first gas stream comprising ammonia is introduced into the chamber 20 through the first pipe 10a, 10b, ammonia is then partially decomposed in the chamber 20 to produce hydrogen and nitrogen, and a second gas stream comprising unreacted ammonia that has not been decomposed in the chamber 20, and hydrogen and nitrogen is discharged from the chamber 20. An operating temperature of the chamber 20 is 410°C or lower.

In an embodiment of the ammonia decomposition method, the first gas stream may comprise ammonia in an amount of 90% by volume to 100% by volume with respect to the entire first gas stream volume. A conversion rate of ammonia in the chamber 20 may be 1.4% or more.

In an embodiment of the ammonia decomposition method, the chamber 20 may comprise an inlet that may be arranged to introduce the first gas stream, and an outlet that may be arranged to discharge the second gas stream, and during the partial decomposition of ammonia in the chamber 20, an inlet temperature of the chamber 20 may be controlled in a range of 300°C to 410°C, and an outlet temperature of the chamber 20 may be controlled in a range of 300°C to 600°C.

In an embodiment, the outlet temperature of the chamber 20 may be controlled in a range of 300°C to 550°C, optionally 300°C to 410°C.

In an embodiment, a temperature difference between the inlet temperature and the outlet temperature of the chamber 20 may be controlled in a range of 0°C to 200°C.

In an embodiment of the ammonia decomposition method, a space velocity may be in a range of 4,000 $hr^{-1}$ or more and, preferably, 120,000 $hr^{-1}$ or less inside the chamber 20 and/or a space velocity may be in a range of 4,000 $hr^{-1}$ or more and, preferably, 120,000 $hr^{-1}$ or less inside a catalyst filling section filled with a catalyst.

In an embodiment of the ammonia decomposition method, while the first gas stream flows through the first pipe 10a, 10b, an inlet temperature of the first pipe 10a, 10b may be controlled in a range of 0°C to 200°C, and an outlet temperature of the first pipe 10a, 10b may be controlled in a range of 200°C to 410°C.

In an embodiment of the ammonia decomposition method, while the second gas stream flows through the second pipe 30, an inlet temperature of the second pipe 30 may be controlled in a range of 410°C to 650°C, and an outlet temperature of the second pipe 30 may be controlled in a range of 450°C to 700°C.

In an embodiment of the ammonia decomposition method, while the second gas stream flows through the second pipe 30, a temperature of the second gas stream from an inlet to an outlet of the second pipe 30 may be increased at a heating rate of 0.1°C/min to 10°C/min.

It is referred to the above sections about the corrosion-resistant system 100 regarding any beneficial technical effects associated with the aforementioned embodiments of the method for ammonia decomposition.

**<Carbon-free power generation system>**

FIG. 2 is a schematic block diagram of a carbon-free power generation system 200 according to an embodiment of the present disclosure.

**By** including the above-described corrosion-resistant system 100 and a turbine power generation unit 40, the carbon-free power generation system 200 may generate electrical energy without a decrease in long-term reaction reliability and energy efficiency.

In some embodiments, the turbine power generation unit may include a gas turbine generator.

In some embodiments, the second gas stream may be supplied to a fuel supply pipe of the turbine power generation unit 40. The turbine power generation unit 40 may use the second gas stream as fuel to generate electricity.

**The** second pipe 30 and the turbine generator may be connected via a connection line. The connection line may be a connecting pipe, and may include, for example, carbon steel, low-alloy steel, stainless steel, and/or a nickel-based alloy.

The connecting pipe may include, for example, a nickel-based alloy ($N_T$).

As a non-limiting example, the gas turbine generator may include a gas turbine that converts thermal energy generated by fuel combustion into rotational energy, and a generator configured to generate electricity using the rotational energy of the gas turbine.

The gas turbine generator may generate electricity by driving a turbine through fuel combustion, thereby realizing a carbon-free power generation method that does not emit carbon dioxide ($CO_2$).

In the gas turbine generator, waste heat may be generated through various paths in the form of combustion gas, exhaust gas, etc.

In some embodiments, the carbon-free power generation system may further include a waste heat recovery and supply unit configured to recover waste heat generated from the turbine power generation unit and supply the heat to the chamber 20, or the like, via the connection line. As non-limiting examples, the waste heat recovery unit may include a heat exchanger, a waste heat recovery boiler (WHRB), a multi-tube heat recovery device, or an organic Rankine cycle (ORC) system.

In some embodiments, the carbon-free power generation system may further include an exhaust gas treatment unit. The exhaust gas treatment unit may, for example, treat exhaust gas generated from a gas turbine power generation unit or a combustion unit by cooling, filtering, neutralizing, or adsorbing the exhaust gas.

As non-limiting examples, the exhaust gas treatment unit may include a scrubber, a selective catalytic reduction (SCR) device, an oxidation catalyst, or an activated carbon adsorption device.

In some embodiments, the carbon-free power generation system may further include a waste heat control valve, an exhaust gas regulator, and/or an intermediate heat storage unit to improve heat exchange efficiency or control operating conditions.

## <Fuel cell system>

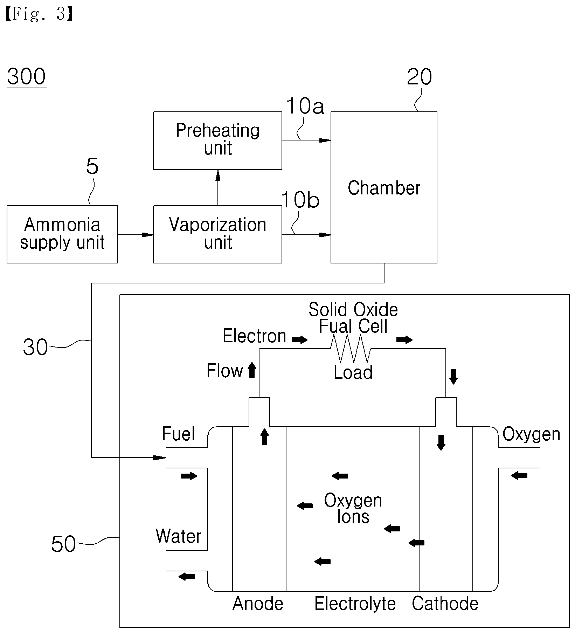

FIG. 3 is a schematic block diagram of a fuel cell system 300 according to an embodiment of the present disclosure.

**By** including the above-described corrosion-resistant system 100 and a fuel cell unit 50 including at least one fuel cell stack, the solid oxide fuel cell system 300 may generate electrical energy without a decrease in long-term reaction reliability and energy efficiency.

In some embodiments, the fuel cell system may be a solid oxide fuel cell (SOFC) system.

In some embodiments, the second gas stream may be supplied to a fuel supply pipe of the fuel cell unit 50. The fuel cell unit 50 may use the second gas stream as fuel to generate electricity.

As a non-limiting example, the fuel cell unit 50 may further include a fuel supply unit connected to the fuel supply pipe, a fuel storage unit connected to the fuel supply unit, a fuel cell unit connected to the fuel storage unit and configured to receive fuel and generate electrical energy, a heat supply unit, a waste heat recovery unit, and/or a refrigerant circulation path.

For example, the fuel cell stack may include a cathode and an anode, and a solid or semisolid electrolyte interposed therebetween. The solid electrolyte may include, for example, a solid oxide capable of conducting oxygen or hydrogen ions.

As a non-limiting example, the cathode may be connected to an air supply unit to receive pressurized and heated air.

As a non-limiting example, the anode may be connected to the fuel supply unit to receive hydrogen-containing fuel generated from the fuel supply unit.

The second pipe 30 and the fuel cell stack may be connected via a connection line. The connection line may be a connecting pipe and may include, for example, carbon steel, low-alloy steel, stainless steel, and/or a nickel-based alloy.

The connecting pipe may include, for example, a nickel-based alloy ($N_T$).

In some embodiments, the fuel cell system may further include an exhaust gas treatment unit. Reference may be made to the above-described exhaust gas treatment unit.

According to embodiments of the present disclosure, the corrosion-resistant system 100, the carbon-free power generation system 200, and/or the fuel cell system 300 may be used in various applications, such as fuel cell systems, shipboard power generation systems, power supply systems, and combined heat and power (CHP) systems.

## Example 1

A corrosion-resistant system was designed, including an ammonia storage tank made of SUS304, a first pipe made of SUS304, an ammonia decomposition unit including a chamber made of SUS304, and a second pipe made of Inconel 625, arranged in this order. The corrosion-resistant system was implemented under the conditions listed in Tables 1 and 2 below. The operating temperature here may refer to the average temperature.

The chamber was equipped with a catalyst filling tube filled with a catalyst.

### Example 2

The same system as in Example 1 was implemented under the conditions listed in Tables 1 and 2 below, except that the second pipe was made of Inconel 601.

### Example 3

The same system as in Example 1 was implemented under the conditions listed in Tables 1 and 2 below, except that the chamber was made of carbon steel.

### Example 4

The same system as in Example 1 was implemented under the conditions listed in Tables 1 and 2 below.

### Example 5

The same system as in Example 1 was implemented under the conditions listed in Tables 1 and 2 below.

### Comparative Example 1

The same system as in Example 1 was implemented under the conditions listed in Tables 1 and 2 below, except that the chamber was omitted.

### Comparative Example 2

The same system as in Example 1 was implemented under the conditions listed in Tables 1 and 2 below, except that the second pipe was made of SUS304.

### Comparative Example 3

The same system as in Example 1 was implemented under the conditions listed in Tables 1 and 2 below, except that the second pipe was made of SUS316.

### Comparative Example 4

The same system as in Comparative Example 1 was implemented under the conditions listed in Tables 1 and 2 below, except that the second pipe was made of Inconel 601.

[TABLE 1]

| | Chamber | | | | | |
|---|---|---|---|---|---|---|
| | Inlet temperature | Outlet temperature | Operating temperature | Gas stream | Space velocity of catalyst $(hr^{-1})$ | Ammonia conversion rate (%) |
| Example 1 | 350°C | 300°C | 350±10°C | 99.99999 vol% $NH_3$ | 15,000 | 10.0 |
| Example 2 | 350°C | 300°C | 350±10°C | | 15,000 | 10.0 |
| Example 3 | 350°C | 300°C | 350±10°C | | 15,000 | 10.0 |
| Example 4 | 350°C | 340°C | 350±10°C | | 80,000 | 1.4 |
| Example 5 | 350°C | 340°C | 350±10°C | | 125,000 | 0.7 |
| Comparative Example 1 | - | | | | | |
| Comparative Example 2 | 350°C | 300°C | 350±10°C | 99.99999 vol% $NH_3$ | 15,000 | 10.0 |
| Comparative Example 3 | 350°C | 300°C | 350±10°C | | 15,000 | 10.0 |
| Comparative Example 4 | - | | | | | |

[TABLE 2]

| | Second pipe | | | | | |
|---|---|---|---|---|---|---|
| | Inlet temperature | Outlet temperature | Operating temperature (°C) | Gas stream (vol%) | | |
| | | | | NH$_3$ | H$_2$ | N$_2$ |
| Example 1 | 475°C | 550°C | 510±10°C | 81.8 | 13.6 | 4.5 |
| Example 2 | 475°C | 550°C | 510±10°C | 81.8 | 13.6 | 4.5 |
| Example 3 | 475°C | 550°C | 510±10°C | 81.8 | 13.6 | 4.5 |
| Example 4 | 475°C | 550°C | 510±10°C | 97.2 | 2.1 | 0.7 |
| Example 5 | 475°C | 550°C | 510±10°C | 98.6 | 1.0 | 0.3 |
| Comparative Example 1 | 475°C | 550°C | 510±10°C | 99.99999 vol% NH$_3$ | | |
| Comparative Example 2 | 475°C | 550°C | 510±10°C | 81.8 | 13.6 | 4.5 |
| Comparative Example 3 | 475°C | 550°C | 510±10°C | 81.8 | 13.6 | 4.5 |
| Comparative Example 4 | 475°C | 550°C | 510±10°C | 99.99999 vol% NH$_3$ | | |

**Experimental Examples**

**Experimental** Example 1: Evaluation of corrosion resistance

In the above-described examples and comparative examples, the corrosion resistance of the inner surfaces of the chamber and the second pipe was evaluated using metal specimens made of the same material as their inner surfaces (hereinafter, "corresponding metal specimens").

Under substantially the same conditions, the ammonia-induced nitridation reaction occurring on the inner surfaces of the chamber and the second pipe was considered to proceed at substantially the same rate according to the same reaction equation on the surfaces of the corresponding metal specimens, even taking into account test errors and differences in surface conditions.

Therefore, the corrosion resistance evaluation results for the corresponding metal specimens were used as indicators for evaluating the corrosion resistance characteristics of the inner surfaces of the chamber and the second pipe.

(1) Corrosion resistance of chamber according to operating temperature

1) In Example 1, cylindrical metal specimens having a circular cross-sectional diameter of 2 mm and a height of 200 mm were prepared using the same material as that of the chamber (SUS304) (hereinafter referred to as "cylindrical specimens").

**In** addition, cylindrical specimens made of SUS316 and Inconel 625 were prepared using the same method and designated as Examples 1-1 and 1-2, respectively.

**A** vertical quartz tube reactor connected to a gas stream supply section, a gas stream discharge section and a furnace was prepared.

Each cylindrical specimen was mounted in the vertical quartz tube reactor, and the temperature inside the vertical quartz tube reactor was increased to the operating temperature at a heating rate of 10°C/min. At this time, a gas stream including 99.99999 vol% NH$_3$ was continuously supplied to the vertical quartz tube reactor.

The operating temperature of the vertical quartz tube reactor was increased in 10°C increments from 300°C to 450°C, and the vertical quartz tube reactor was operated at the operating temperature for 36 hours to obtain nitrided cylindrical specimens.

**From** one end of the nitrided cylindrical specimens, sectioning was performed at 5 mm intervals along the height in a direction perpendicular to the height, thereby obtaining 41 specimens. SEM images of the cut circular cross-sections of the obtained specimens were taken using a scanning electron microscope (SEM) (Helios PFIB instrument, Thermo Fisher Scientific). Appropriate magnification levels were selected to accurately measure the nitrided depths. For example, magnifications of 2000x and 500x were used for nitrided depths of 40 $\mu$m or less and greater than 40 $\mu$m, respectively.

**For** the SEM images, the elemental composition within the SEM images was analyzed using the energy

dispersive X-ray spectroscopy (EDS) function of the same SEM instrument. Based on the analysis results of the elemental composition, the nitrided depths were measured from three arbitrary points on the outermost edge of the circular cross-section toward the central axis.

The corrosion resistance was evaluated to be higher when the maximum value among the nitrided depths was smaller.

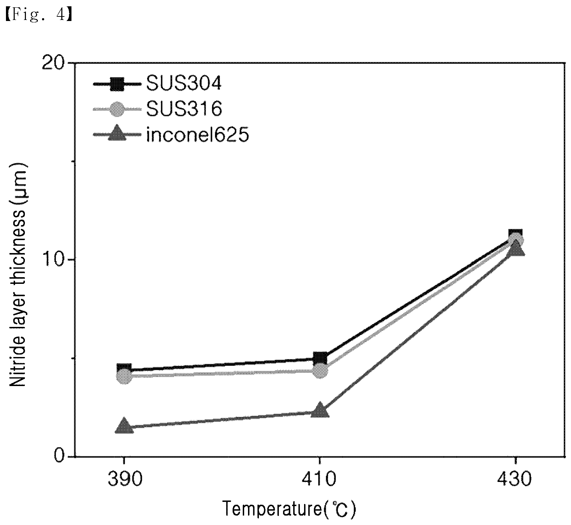

The results are shown in Table 3 and FIG. 4. Since it is impractical to present the nitrided depths at all temperatures in Table 3, representative data at 390°C, 410°C, and 430°C are described.

[TABLE 3]

| Operating temperature | Example 1 (SUS304) | Example 1-1 (SUS316) | Example 1-2 (Inconel 625) |
|---|---|---|---|
| 390°C | 4.4 $\mu$m | 4.1 $\mu$m | 1.5 $\mu$m |
| 410°C | 5.0 $\mu$m | 4.4 $\mu$m | 2.3 $\mu$m |
| 430°C | 11.2 $\mu$m | 11.0 $\mu$m | 10.5 $\mu$m |

2) Cylindrical specimens made of SUS304, SUS316, and Inconel 625 were prepared by the same method as described above.

The maximum nitrided depths were evaluated by the same method as described above, except that the operating time of the vertical quartz tube reactor was changed to 100 hours.

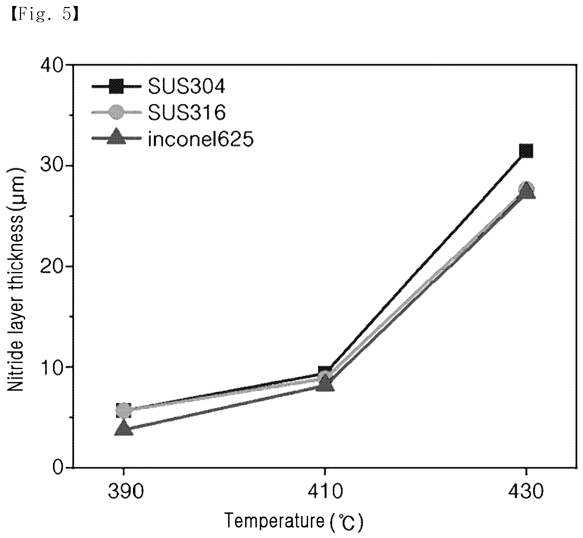

The results are shown in Table 4 and FIG. 5.

[TABLE 4]

| Operating temperature | Example 1 (SUS304) | Example 1-1 (SUS316) | Example 1-2 (Inconel 625) |
|---|---|---|---|
| 390°C | 5.7 $\mu$m | 5.7 $\mu$m | 3.8 $\mu$m |
| 410°C | 9.4 $\mu$m | 8.9 $\mu$m | 8.2 $\mu$m |
| 430°C | 31.5 $\mu$m | 27.7 $\mu$m | 27.3 $\mu$m |

From Tables 3 and 4, and FIGS. 4 and 5, it was confirmed that corrosion on the internal surface of the chamber began to sharply increase at temperatures exceeding 410°C. In addition, as the operating time increased under conditions exceeding 410°C, the corrosion rate on the internal surface of the chamber further accelerated.

(2) Corrosion resistance of chamber over operating time

In Examples 1 to 5, cylindrical metal specimens having a circular cross-sectional diameter of 2 mm and a height of 200 mm were prepared using the same material as that of the chamber (hereinafter referred to as "cylindrical specimens").

A vertical quartz tube reactor connected to a gas stream supply section, a gas stream discharge section and a furnace was prepared.

The cylindrical specimens were mounted in the vertical quartz tube reactor, and the temperature inside the vertical quartz tube reactor was increased at a heating rate of 10°C/min to the chamber operating temperature corresponding to Table 1.

Thereafter, the cylindrical specimens were exposed to an environment corresponding to Table 1 for 100 hours from the time the chamber operating temperature was reached, thereby obtaining nitrided cylindrical specimens.

For the nitrided cylindrical specimens, the maximum nitrided depths were evaluated by the same method as described above.

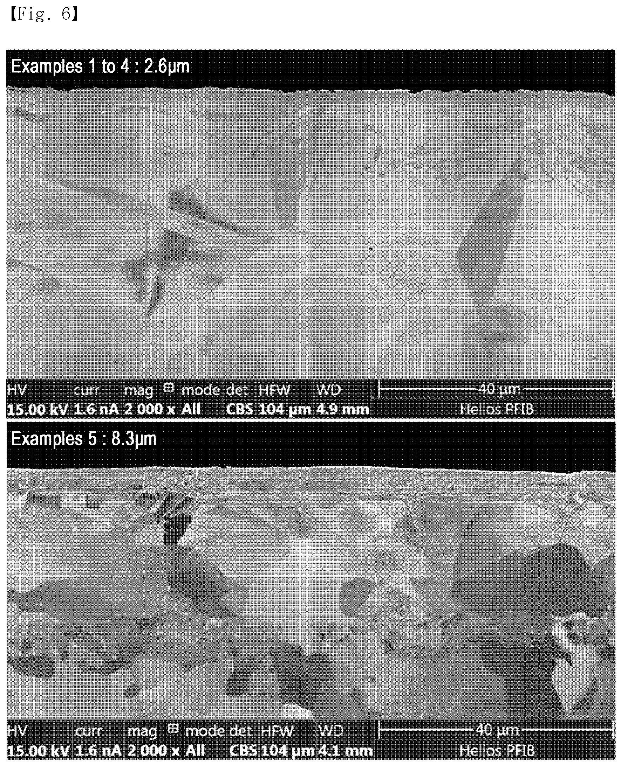

The results are shown in Table 5 and FIG. 6.

(3) Corrosion resistance of second pipe over operating time

In Examples 1 to 5 and Comparative Examples 1 to 4, cylindrical metal specimens having a circular cross-sectional diameter of 2 mm and a height of 200 mm were prepared using the same material as that of the second pipe (hereinafter referred to as "cylindrical specimens").

A vertical quartz tube reactor connected to a gas stream supply section, a gas stream discharge section and a furnace was prepared.

The cylindrical specimens were mounted in the vertical quartz tube reactor, and the temperature inside the vertical quartz tube reactor was increased at a heating rate of 10°C/min to the second pipe operating temperature corresponding to Table 2.

Thereafter, the cylindrical specimens were exposed to an environment corresponding to Table 2 for 100 hours from the time the second pipe operating temperature was reached, thereby obtaining nitrided cylindrical specimens.

**For** the nitrided cylindrical specimens, the maximum nitrided depths were evaluated by the same method as described above.

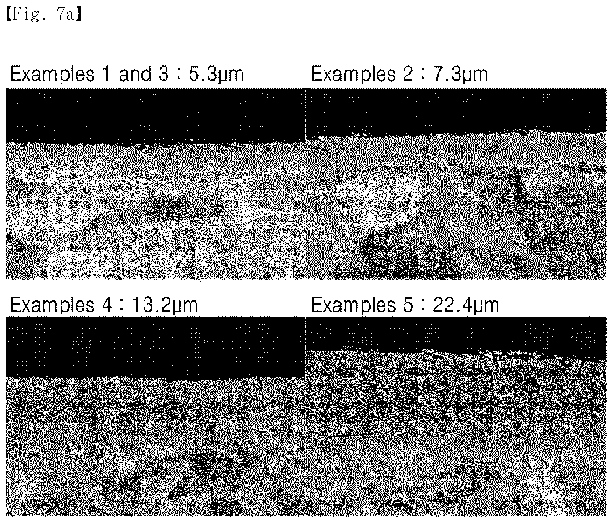

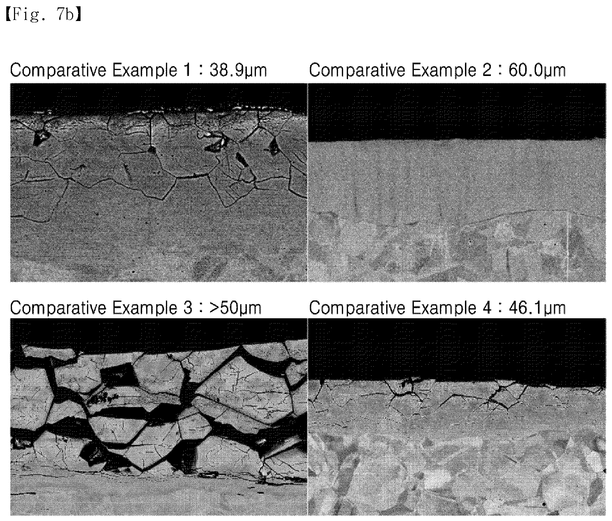

The results are shown in Table 5 and FIGS. 7A and 7B.

The SEM measurement conditions in Examples 1 to 5 and Comparative Example 1 are as follows:

HV (High Voltage): 15.00 kV
CURR (Beam Current): 1.6 nA
MAG (Magnification): 2000x
DET (Detector): CBS (Circular Backscatter Detector)

The SEM measurement conditions in Comparative Examples 2 to 4 are as follows:

HV (High Voltage): 15.00 kV
CURR (Beam Current): 1.6 nA
MAG (Magnification): 500x
DET (Detector): CBS (Circular Backscatter Detector)

[TABLE 5]

|  | Corrosion resistance of chamber (maximum nitrided depth) | Corrosion resistance of second pipe (maximum nitrided depth) |
|---|---|---|
| Example 1 | 2.6 $\mu$m | 5.3 $\mu$m |
| Example 2 | 2.6 $\mu$m | 7.3 $\mu$m |
| Example 3 | 8.3 $\mu$m | 5.3 $\mu$m |
| Example 4 | 2.6 $\mu$m | 13 $\mu$m |
| Example 5 | 2.6 $\mu$m | 22 $\mu$m |
| Comparative Example 1 | - | 39 $\mu$m |
| Comparative Example 2 | 2.6 $\mu$m | 60 $\mu$m |
| Comparative Example 3 | 2.6 $\mu$m | >50 $\mu$m |
| Comparative Example 4 | - | 46.1 $\mu$m |

Referring to Table 5, in Example 3, which employed a chamber made of carbon steel, a relatively high level of corrosion was observed after long-term operation.

Conversely, the second pipes of the examples including the nickel-based alloy ($N_T$) satisfying Equation 1 described above exhibited minimal corrosion even after long-term operation, indicating improved reliability and stability.

**In** Example 5, due to the relatively low hydrogen concentration in the gas stream supplied to the second pipe, the corrosion resistance was reduced.

**In** Comparative Examples 1 and 4, a gas stream including 99.99999 vol% $NH_3$ was supplied directly to the high-temperature second pipe without passing through the chamber, resulting in rapid nitridation, and thus, the reliability and stability deteriorated during long-term operation. In Comparative Example 4, where the second pipe was made of Inconel 601, the corrosion rate increased further.

**In** Comparative Examples 2 and 3, the second pipe was made of SUS304 and SUS316, respectively, and since these materials did not satisfy Equation 1, their corrosion resistance further deteriorated after long-term operation.

<u>Experimental Example 2: Evaluation of corrosion rate</u>

(1) Corrosion rate of chamber

**In** Examples 1 to 5, cylindrical metal specimens having a circular cross-sectional diameter of 2 mm and a height of 200 mm were prepared using the same material as that of the chamber (hereinafter referred to as "cylindrical specimens").

## EP 4 711 327 A1

A vertical quartz tube reactor connected to a gas stream supply section, a gas stream discharge section and a furnace was prepared.

The cylindrical specimens were mounted in the vertical quartz tube reactor, and the temperature inside the vertical quartz tube reactor was increased at a heating rate of 10°C/min to the chamber operating temperature corresponding to Table 1.

Thereafter, the cylindrical specimens were exposed to an environment corresponding to Table 1 for 36 hours, 100 hours, 200 hours, and 400 hours, respectively, from the time the chamber operating temperature was reached, thereby obtaining nitrided cylindrical specimens.

For the nitrided cylindrical specimens, the maximum nitrided depths were evaluated by the same method as described above.

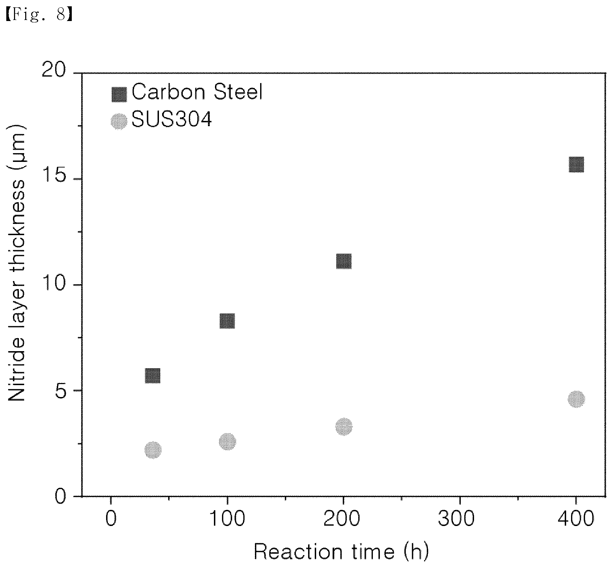

The results are shown in Table 6 and FIG. 8.

[TABLE 6]

|  |  | Examples 1, 2, 4 and 5 | Example 3 |
|---|---|---|---|
| Material | | SUS304 | Carbon steel |
| Maximum nitrided depth ($\mu$m) | 36 hr | 2.2 | 5.7 |
|  | 100 hr | 2.6 | 8.3 |
|  | 200 hr | 3.3 | 11.1 |
|  | 400 hr | 4.6 | 15.7 |

According to Table 6, as the operating time increased at an operating temperature of $350\pm10°C$, the corrosion rate increased more significantly in Example 4, which employed a chamber made of carbon steel, than in the other examples.

(2) Corrosion rate of second pipe

In Example 1 and Comparative Examples 2 and 3, cylindrical metal specimens having a circular cross-sectional diameter of 2 mm and a height of 200 mm were prepared using the same material as that of the second pipe (hereinafter referred to as "cylindrical specimens").

A vertical quartz tube reactor connected to a gas stream supply section and a furnace was prepared.

The cylindrical specimens were mounted in the vertical quartz tube reactor, and the temperature inside the vertical quartz tube reactor was increased at a heating rate of 10°C/min to the second pipe operating temperature corresponding to Table 2.

Thereafter, the cylindrical specimens were exposed to an environment corresponding to Table 2 for 36 hours, 100 hours, 200 hours, and 400 hours, respectively, from the time the second pipe operating temperature was reached, thereby obtaining nitrided cylindrical specimens.

For the nitrided cylindrical specimens, the maximum nitrided depths were evaluated by the same method as described above.

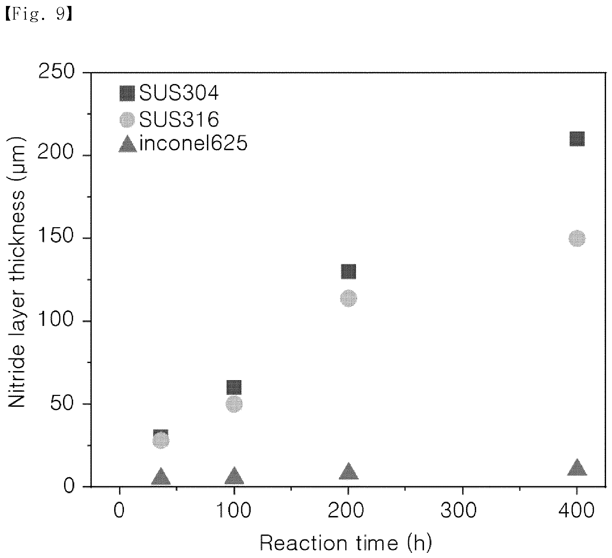

The results are shown in Table 7 and FIG. 9.

[TABLE 7]

|  |  | Example 1 | Comparative Example 2 | Comparative Example 3 |
|---|---|---|---|---|
| Material | | Inconel 625 | SUS304 | SUS316 |
| Maximum nitrided depth ($\mu$m) | 36 hr | 4.8 | 30 | 28 |
|  | 100 hr | 5.3 | 60 | 50 |
|  | 200 hr | 7.9 | 130 | 114 |
|  | 400 hr | 10.2 | 210 | 150 |

Referring to Table 7, at an operating temperature of $510\pm10°C$, the degree of nitridation for the second pipe in Example 1, which included the nickel-based alloy ($N_T$) satisfying Equation 1 described above, was very low. Even after long-term operation, the increase in the maximum nitrided depth was significantly reduced, demonstrating improved reliability and stability.

Conversely, in the comparative examples, which employed second pipes made of SUS304 and SUS316, respectively, the corrosion resistance deteriorated at the above operating temperature, and the increase in corrosion rate became more significant as the operating time increased.

**Claims**

1. A corrosion-resistant system (100), comprising:

   an ammonia supply unit (5); a first pipe (10a, 10b) connected to the ammonia supply unit (5); an ammonia decomposition unit comprising a chamber (20) connected to the first pipe (10a, 10b); and a second pipe (30) connected to the chamber (20),
   wherein the first pipe (10a, 10b) is configured to introduce a first gas stream comprising ammonia into the chamber (20), the chamber (20) is configured to partially decompose ammonia to produce hydrogen and nitrogen inside the chamber (20), and a second gas stream comprising unreacted ammonia that has not been decomposed in the chamber (20), and hydrogen and nitrogen is dischargeable from the chamber (20),
   wherein the chamber (20) is configured to operate at an operating temperature of 410°C or lower,
   wherein the first pipe (10a, 10b) and the chamber (20) comprise at least one selected from the group consisting of carbon steel, low alloy steel, stainless steel and a nickel-based alloy, and
   wherein the second pipe (30) comprises a nickel-based alloy ($N_T$) satisfying Equation 1 below:

   $$[\text{Equation 1}]$$

   $$T \leq 15 \ \mu m,$$

   in Equation 1, T is the maximum value of nitrided depths measured from a side surface toward a central axis of a cylindrical specimen when the nickel-based alloy ($N_T$) is prepared as a cylindrical specimen having a diameter of 2 mm and a height of 200 mm, and the cylindrical specimen is exposed to a gas stream comprising 97.2% by volume $NH_3$, 2.1% by volume $H_2$, and 0.7% by volume $N_2$ in a temperature environment of 500°C for 100 hours, and the nitrided depths are measured using scanning electron microscopy (SEM) and energy dispersive X-ray spectroscopy (EDS) analysis.

2. The corrosion-resistant system (100) according to claim 1, wherein the first gas stream comprises ammonia in an amount of 90% by volume to 100% by volume with respect to the entire first gas stream volume.

3. The corrosion-resistant system (100) according to claim 1 or 2, wherein a conversion rate of ammonia in the chamber (20) is 1.4% or more.

4. The corrosion-resistant system (100) according to any one of claims 1 to 3, wherein the chamber (20) comprises an inlet that is arranged to introduce the first gas stream, and an outlet that is arranged to discharge the second gas stream, and
   during the partial decomposition of ammonia in the chamber (20), an inlet temperature of the chamber (20) is controllable in a range of 300°C to 410°C, and an outlet temperature of the chamber (20) is controllable in a range of 300°C to 600°C.

5. The corrosion-resistant system (100) according to claim 4, wherein the outlet temperature of the chamber (20) is controllable in a range of 300°C to 550°C.

6. The corrosion-resistant system (100) according to claim 4, wherein a temperature difference between the inlet temperature and the outlet temperature of the chamber (20) is controllable in a range of 0°C to 200°C.

7. The corrosion-resistant system (100) according to any one of claims 1 to 6, wherein the chamber (20) further comprises a catalyst filling section filled with a catalyst.

8. The corrosion-resistant system (100) according to claim 7, wherein a space velocity is in a range of 4,000 hr$^{-1}$ or more and, preferably, 120,000 hr$^{-1}$ or less inside the chamber (20) and/or inside the catalyst filling section filled with the catalyst.

9. The corrosion-resistant system (100) according to any one of claims 1 to 8, wherein, while the first gas stream flows through the first pipe (10a, 10b), an inlet temperature of the first pipe (10a, 10b) is controllable in a range of 0°C to 200°C, and an outlet temperature of the first pipe (10a, 10b) is controllable in a range of 200°C to 410°C.

10. The corrosion-resistant system (100) according to any one of claims 1 to 9, wherein, while the second gas stream flows through the second pipe, an inlet temperature of the second pipe (30) is controllable in a range of 410°C to 650°C, and an outlet temperature of the second pipe (30) is controllable in a range of 450°C to 700°C.

11. The corrosion-resistant system (100) according to any one of claims 1 to 10, wherein, while the second gas stream flows through the second pipe (30), a temperature of the second gas stream from an inlet to an outlet of the second pipe (30) is increasable at a heating rate of 0.1°C/min to 10°C/min.

12. The corrosion-resistant system (100) according to any one of claims 1 to 11, wherein the chamber (20) comprises at least one selected from the group consisting of low alloy steel, stainless steel, and a nickel-based alloy.

13. A method for controlling ammonia decomposition utilizing a corrosion-resistant system (100) comprising an ammonia supply unit (5); a first pipe (10a, 10b) arranged to be connected to the ammonia supply unit (5); an ammonia decomposition unit comprising a chamber (20) arranged to be connected to the first pipe (10a, 10b); and a second pipe (30) arranged to be connected to the chamber (20), the first pipe (10a, 10b) and the chamber (20) comprising at least one selected from the group consisting of carbon steel, low alloy steel, stainless steel and a nickel-based alloy, the second pipe (30) comprising a nickel-based alloy ($N_T$) satisfying Equation 1 below:

$$[\text{Equation 1}]$$

$$T \leq 15 \ \mu m,$$

in Equation 1, T is the maximum value of nitrided depths measured from a side surface toward a central axis of a cylindrical specimen when the nickel-based alloy ($N_T$) is prepared as a cylindrical specimen having a diameter of 2 mm and a height of 200 mm, and the cylindrical specimen is exposed to a gas stream comprising 97.2% by volume $NH_3$, 2.1% by volume $H_2$, and 0.7% by volume $N_2$ in a temperature environment of 500°C for 100 hours, and the nitrided depths are measured using scanning electron microscopy (SEM) and energy dispersive X-ray spectroscopy (EDS) analysis,
the method comprising the following steps:

a first gas stream comprising ammonia is introduced into the chamber (20) through the first pipe (10a, 10b), ammonia is then partially decomposed in the chamber (20) to produce hydrogen and nitrogen, and
a second gas stream comprising unreacted ammonia that has not been decomposed in the chamber (20), and hydrogen and nitrogen is discharged from the chamber (20),
wherein an operating temperature of the chamber (20) is 410°C or lower.

14. A carbon-free power generation system (200), comprising:

the corrosion-resistant system (100) according to any one of claims 1 to 12; and
a turbine power generation unit (40),
wherein the turbine power generation unit (40) is arranged to be connected to at least part of the outlet of the corrosion-resistant system (100).

15. A fuel cell system (300), comprising:

the corrosion-resistant system (100) according to any one of claims 1 to 12; and
a fuel cell unit (50) comprising at least one fuel cell stack,
wherein the fuel cell unit (50) is arranged to be connected to at least part of the outlet of the corrosion-resistant system (100).

【Fig. 1】

100

```
                    ┌──────────────┐
                    │  Preheating  │──10a──┐
                    │     unit     │       │
                    └──────────────┘       ▼
   5                        ▲          ┌─────────┐   30   ┌──────────────┐
   ┌──────────────┐    ┌──────────────┐│         │──────▶│    Power     │
   │   Ammonia    │───▶│ Vaporization │─10b─│Chamber│      │generation unit│
   │ supply unit  │    │     unit     │──────▶│    20  │                │
   └──────────────┘    └──────────────┘      └─────────┘   └──────────────┘
```

【Fig. 2】

200

【Fig. 3】

300

【Fig. 4】

EP 4 711 327 A1

【Fig. 5】

22

【Fig. 6】

【Fig. 7a】

Examples 1 and 3 : 5.3μm      Examples 2 : 7.3μm

Examples 4 : 13.2μm      Examples 5 : 22.4μm

【Fig. 7b】

Comparative Example 1 : 38.9μm    Comparative Example 2 : 60.0μm

Comparative Example 3 : >50μm    Comparative Example 4 : 46.1μm

【Fig. 8】

【Fig. 9】

| | Europäisches Patentamt European Patent Office Office européen des brevets | **EUROPEAN SEARCH REPORT** | Application Number EP 25 20 1431 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GB 2 625 908 A (JOHNSON MATTHEY PLC [GB]) 3 July 2024 (2024-07-03) * page 1, line 9 - line 12; claims; figure 4 * * page 2, line 21 - line 26 * * page 2, line 1 - line 8 * ----- | 1-15 | INV. C01B3/047 C22C19/03 C22C38/00 C22C38/40 F02B43/00 F02M21/02 B01J19/02 H01M8/0606 H01M8/22 F02C3/22 F02C6/18 |
| Y | US 2024/166503 A1 (WHITE VINCENT [GB] ET AL) 23 May 2024 (2024-05-23) * paragraph [0083] - paragraph [0084]; figure 1 * ----- | 1-15 | |
| X | JP 6 943524 B2 (SHOWA DENKO KK [JP]) 6 October 2021 (2021-10-06) | 1-15 | |
| Y | * paragraphs [0015], [0029] - [0031], [0036], [0037]; figures 1, 2 * ----- | 1-15 | |
| A | WO 2022/189560 A1 (TOPSOE AS [DK]) 15 September 2022 (2022-09-15) * page 7, line 4 - line 26 * ----- | 1-15 | |

| | TECHNICAL FIELDS SEARCHED (IPC) |
|---|---|
| | C01B F02B C22C F02M B01J H01M F02C |

The present search report has been drawn up for all claims

| Place of search | Date of completion of the search | Examiner |
|---|---|---|
| The Hague | 3 February 2026 | Engelen, Karen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

2

## ANNEX TO THE EUROPEAN SEARCH REPORT
## ON EUROPEAN PATENT APPLICATION NO.

EP 25 20 1431

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2026

| Patent document cited in search report | | Publication date | Patent family member(s) | | Publication date |
|---|---|---|---|---|---|
| GB 2625908 | A | 03-07-2024 | CN | 119998228 A | 13-05-2025 |
| | | | EP | 4619339 A1 | 24-09-2025 |
| | | | GB | 2625908 A | 03-07-2024 |
| | | | JP | 2025532364 A | 29-09-2025 |
| | | | KR | 20250106272 A | 09-07-2025 |
| | | | TW | 202440454 A | 16-10-2024 |
| | | | WO | 2024105393 A1 | 23-05-2024 |
| US 2024166503 | A1 | 23-05-2024 | AU | 2023266326 A1 | 06-06-2024 |
| | | | CA | 3220532 A1 | 21-05-2024 |
| | | | CN | 118056779 A | 21-05-2024 |
| | | | EP | 4378885 A1 | 05-06-2024 |
| | | | JP | 7747713 B2 | 01-10-2025 |
| | | | JP | 2024074792 A | 31-05-2024 |
| | | | KR | 20240074688 A | 28-05-2024 |
| | | | US | 2024166503 A1 | 23-05-2024 |
| JP 6943524 | B2 | 06-10-2021 | JP | 6943524 B2 | 06-10-2021 |
| | | | JP | WO2017154732 A1 | 10-01-2019 |
| | | | TW | 201803802 A | 01-02-2018 |
| | | | WO | 2017154732 A1 | 14-09-2017 |
| WO 2022189560 | A1 | 15-09-2022 | AR | 125527 A1 | 26-07-2023 |
| | | | EP | 4304980 A1 | 17-01-2024 |
| | | | JP | 2024510733 A | 11-03-2024 |
| | | | KR | 20230154201 A | 07-11-2023 |
| | | | WO | 2022189560 A1 | 15-09-2022 |

EPO FORM P0459

For more details about this annex : see Official Journal of the European Patent Office, No. 12/82